# EUROPEAN PATENT APPLICATION

(11) **EP 1 508 999 A2**
(43) Date of publication of application: **23.02.2005**
(21) Application number: 04300533.9
(22) Date of filing: 12.08.2004
(51) Int. Cl.: H04L 12/24

(54) **Mechanism to allow dynamic trusted association between pep partitions and pdps**

(30) Priority: 13.08.2003 US 639677
(71) Applicant: ALCATEL, 75008 Paris (FR)
(72) Inventor: Cuervo, Fernando, Ottawa, Ontario K0A 1T0 (CA); Sim, Michel, Ottawa, Ontario K1Z 6H8 (CA)
(74) Representative: Feray, Valérie

(57) **Abstract**

A cross-domain, integration architecture to allow service providers to provide end to end services is presented. The architecture relates to communication networks having a plurality of domains including their management and enables the effecting of policies on policy-enabled resources across domains by using PEP virtualisation. Policy management is separated from the management of policy-enabled resources. Policy management is performed by a resource policy layer which establishes services across domains in the communication network. A network resource controller in each domain locates within its domain policy-enabled resources that are required to implement the services. The controller also manages those resources. A method of implementing the invention is also discussed.

## Description

### Field of the Invention

This invention relates to communications networks having multiple domains and more particularly to methods and apparatus for effecting policies on policy enabled resources in such networks.

### Background of the Invention

Policy-based management seeks to integrate management systems so that system management, network management and application management can cooperate. Within a policy-based management architecture every network function or process has a role and specific rules or policies governing the role of the function or process exists. Ideally, network resources are positioned to observe and enforce network wide policies so as to provide dynamic features for service creation as well as to enable control from a network provider to the administrator to the end user. In the present description, policies for service creation are initiated by an entity known as a policy decision point (PDP). Control is enabled by a policy enforcement point (PEP).

Through a policy-based management scheme dynamic means are provided to provision and manage network services, such as Transparent LAN Services (TLS) or VLAN, by assigning specific behaviors to the network resources. However, those resources can belong to, or span, separate administrative or technological domains. In reality access to those resources can also be requested by several different management entities in the same domain or in different domains for the same or different network services. Therefore, any given domain must provide mechanisms to outsource, in a trusted manner, the management of a subset of its resources to those management entities. This capability is important for flexible and cost effective deployment of emerging layer 2 and layer 3 network services (e.g. TLS or VPN services).

Some examples of management outsourcing scenarios are:
- management of a subset of provider resources is outsourced to the customer (who has a Policy Decision Point -PDP- for the services it wants on the provider network)
- management of a subset of provider resources is outsourced to other providers (e.g. core resources outsourced to access)
- a customer outsources its operations by providing its own PDP to the service provider to manage the service, while the provider also has its own PDP for other services

As per the IETF policy architecture framework, the prior art in this field is to have a Policy Enforcement Point (PEP) managed by only one PDP per policy domain, with some support for failover to a backup PDP. This information is configured initially in the PEP before it enters the network.

One PDP typically manages one domain. It discovers the network resources in this domain and manages the allocation of those resources between the different services to be implemented. The PEPs receive policies from the PDP and enforce them on the Network Elements (NE) they reside on. Proprietary mechanisms may be used to allow PDPs to negotiate policies between each other in order to provision a service crossing domain boundaries (see).

The major drawbacks of the prior art are:
- Static management association between a PDP and a PEP
- Inability for a PEP to accept policy rules from different PDPs for different resources it controls
- Complexity in management plane
   ο Elaborate negotiations between PDPs
   ο Heavy management traffic between PDPs (exchange of policy rules)
   ο Synchronization of the information
Incompatibility in negotiation protocols between PDPs

### Summary of the Invention

The present invention relates to methods and apparatus for effecting policies on policy enabled resources in a communication network having plurality of domains in order to establish services across the domains. The present invention is distinguished from the prior art by its separation of policy management from the management of policy enabled resources. Policy management is performed by the resource policy layer (RPL) which establishes services across domains in the communication network. A network resource controller (NRC) in each domain locates, within its domain, policy enabled resources that are required to implement the services and it manages these resources.

Therefore in accordance with a first aspect of the present invention there is provided an apparatus for establishing services that utilize policy-enabled resources in a communications network, comprising: a first policy enforcement point (PEP) for identifying policy-enabled resources that are available and allocating requested policy-enabled resources to services; a first network resource controller (NRC) for requesting from available policy-enabled resources any policy-enabled resources required to establish a particular service; and a first resource policy layer (RPL) for provisioning, to a service being established, the policy-enabled resources allocated to that service.

In accordance with a second aspect of the present invention there is provided a method of establishing services that utilize policy-enabled resources in a communications network, comprising: identifying, at a first policy enforcement point (PEP) policy-enabled resources that are available and allocating requested policy-enabled resources to services; requesting, from available policy-enabled resources at a first network resource controller (NRC) any policy-enabled resources required to establish a particular service; and provisioning, to a service being established at a first resource policy layer (RPL), the policy-enabled resources allocated to that service.

### Brief Description of the Drawings

The invention will now be described in greater detail with reference to the attached drawings wherein:

Figure 1 illustrates the policy interaction between domains according to the prior art;

Figure 2 shows the de-coupling of policy management and resource management; and

Figure 3 illustrates the virtualization of the policy enforcement point according to the present invention.

### Detailed Description of the Invention

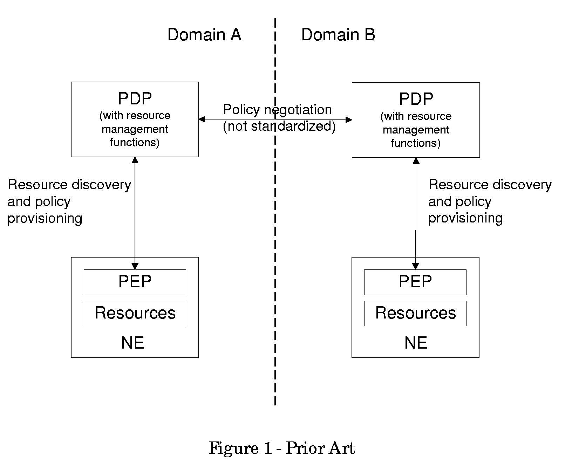

As shown in Figure 1 each domain, identified as domain A and domain B, has its own policy decision point (PDP) each conducting resource discovery and policy provisioning to a policy enforcement point (PEP) within the domain. The policy enforcement point on the network element control resources within its domain.

Any interaction or policy negotiation between policy decision points need to be carried out through policy negotiations. In other words this interaction is not standardized.

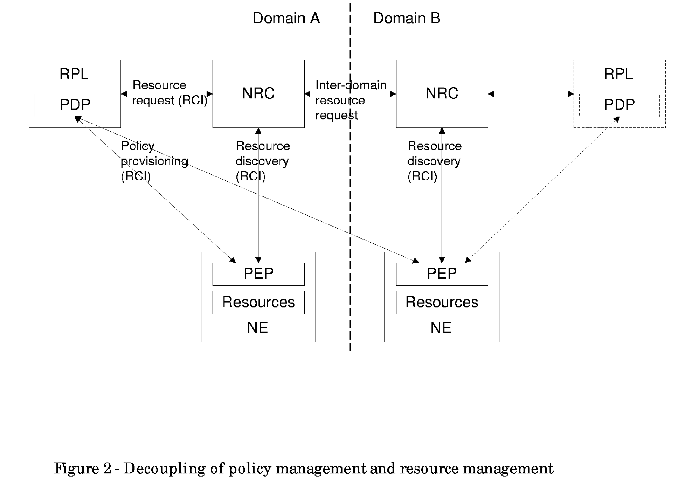

The mechanism to allow dynamic entrusted policy relation establishment between a policy enforcement point and a policy decision point as well as the hand over of the management of part of a policy enforcement point using PEP virtualization (i.e., this is, creating a virtual PEP) to a separate PDP is provided by the present invention, a new virtualized PEP is given the information to contact its PDP. This mechanism is based on the separation of the management of policies from the management of policy enabled resources. This is shown more particularly in Figure 2 which introduces new entities, the resource policy layer (RPL) and the network resource controller. The network resource controller is the network resource management entity in charge, within its domain, of locating the resources needed to implement a network service on behalf of the RPL. For resources outside its domain the NRC signals a request to the NRC in the appropriate adjacent domain. The NRC also acts as the trusted entity that controls the handover of the virtual PEP to a separate PDP.

The resource policy layer is the policy management entity in charge of implementing the network services across domains. It includes one or many PDPs.

This represents a non-centralized management solution since there are several PDPs involved per policy domain.

As shown in Figure 2 resource capability information descriptors (RCI) are used to discover resources between the NRC and the PEP within a domain as well as requesting resources from the PDP and RPL. As shown the PDP in domain A communicates to the PEP within its own domain as well as the PEP in domain B. The NRC in each domain conducts inter domain resource requests.

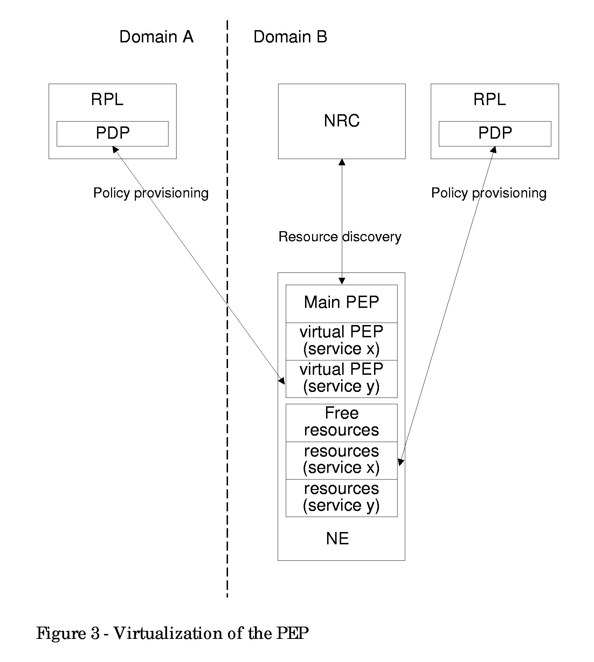

The virtualization of the PEPs to allow a multi PDP management paradigm is illustrated generally in Figure 3. A virtual PEP is created dynamically when the NRC requests resources for a new service instance. This virtual PEP then initiates the policy association with the PDP in charge of implementing the network service and only presents to the PDP resources needed for the service instance. Available resources are managed by the main PDP. Through the present invention there is a separation of the interfaces on the PEP. The separations include the main PEP to the NRC. The main PEP advertises resource pools to the NRC i.e. a course grain view of resources, with resource capabilities. The NRC request that some resources within these pools take on a role that will implement part of the service. This creates or triggers the creation of the virtual PEP. The second interface is the virtual PEP to the PDP. The virtual PEP only advertises resources based on their role within the service instance i.e. a fine grain view of resources. The PDP provides the policy decisions to be implemented on these resources. Finally, a resource capability information descriptor (RCI) is used between PEP to NRC, PDP to NRC and PEP to PDP to establish resource or resource pool capabilities, request resources or allocate resources.

The present invention provides a dynamic and trusted policy relation between a PEP and a PDP. The NRC acts as the trusted entity that initiates the PEP/ PDP association. This allows for more flexibility in order to adapt either different network configurations e.g. mobile ad-hoc networking or changing configurations in the management plane i.e. out source resource control relationships in a multiple domain network.

The multi PDP management of resources according to the invention also provides multi PDP management or resources on a single PEP by means of PDP virtualization. This eliminates the need to negotiate and transfer policies between PEPs. The PEP also retains control over the allocation of its resources to different service instances thus alleviating the need for the PDP to choose a specific resource.

The invention also provides minimization of the information transferred between the PEPs and the management entities. The NRC only needs to have an aggregated view of resources and the PEP is only interested in the resources indirectly identified by the NRC as participating in the network service implementation. This remains compatible with IETF requirements as well as existing protocols such as common open policy service (COPS).

Although specific embodiments of the invention have been described and illustrated it will be apparent to one skilled in the art that numerous changes can be made without departing from the basic concepts. It is to be understood that such changes will fall within the full scope of the invention as defined by the appended claims.

## Claims

1. An apparatus for establishing services that utilize policy-enabled resources in a communications network, comprising:
a first policy enforcement point (PEP) for identifying policy-enabled resources that are available and allocating requested policy-enabled resources to services;
a first network resource controller (NRC) for requesting from available policy-enabled resources any policy-enabled resources required to establish a particular service; and
a first resource policy layer (RPL) for provisioning, to a service being established, the policy-enabled resources allocated to that service.

2. The apparatus as defined in claim 1 wherein the first PEP comprises a plurality of virtual PEPs, each virtual PEP being associated to a respective service.

3. The apparatus as defined in claim 1 wherein the communications network comprises a plurality of domains, each of the first PEP, first NRC, and the first RPL may be associated with any one of the domains.

4. The apparatus as defined in claim 1 wherein the communications network comprises a plurality of domains, the apparatus further comprises a second PEP associated with a different domain than the first PEP.

5. The apparatus as defined in claim 1 wherein the communications network comprises a plurality of domains, the apparatus further comprises a second NRC associated with a different domain than the first PEP.

6. The apparatus as defined in claim 1 wherein the communications network comprises a plurality of domains, the apparatus further comprises a second RPL associated with a different domain than the first PEP.

7. The apparatus as defined in claim 1 wherein each RPL comprises one or more PDPs

8. The apparatus as defined in claim 1 wherein resource capability information descriptors are used for resource discovery and policy provisioning between entities.

9. A method of establishing services that utilize policy-enabled resources in a communications network, comprising:
identifying, at a first policy enforcement point (PEP) policy-enabled resources that are available and allocating requested policy-enabled resources to services;
requesting, from available policy-enabled resources at a first network resource controller (NRC) any policy-enabled resources required to establish a particular service; and
provisioning, to a service being established at a first resource policy layer (RPL), the policy-enabled resources allocated to that service.

10. The method as defined in claim 9 wherein the communications network comprises a plurality of domains, each of the first PEP, first NRC, and the first RPL may be associated with any one of the domains

11. The method as defined in claim 9 wherein virtual PEPs of a main PEP are provisioned to provide resource services.

12. The method as defined in claim 10 wherein the virtual PEPs are provisioned to provide services in a different domain.

13. The method as defined in claim 12 wherein separate PEPs, each from a different domain, are provisioned to the same service by a PDP.

14. The method as defined in claim 13 wherein two separate PEPs, each from a different domain, are provisioned to the same service by a PDP.

15. The method as defined in claim 14 wherein the PDP is in one of the two domains.

16. The method as defined in claim14 wherein the PDP is in a third domain.
